# EUROPÄISCHE PATENTSCHRIFT

(11) **EP 0 767 118 B1**
(45) Veröffentlichungstag und Bekanntmachung des Hinweises auf die Patenterteilung: **17.11.1999**
(21) Anmeldenummer: 95115851.8
(22) Anmeldetag: 09.10.1995
(51) Int. Cl.: B65G 53/00, B65G 53/46

(54) **Spritzmaschine mit einer angetriebenen Rotorstufe**
Spraying machine with a driven rotor
Machine de pulvérisation à rotor entraîné

(43) Veröffentlichungstag der Anmeldung: 09.04.1997
(73) Patentinhaber: Sika Equipment AG, 8967 Widen (CH)
(72) Erfinder: Egli, Ernst, CH-8951 Fahrweid (CH)
(74) Vertreter: Troesch Scheidegger Werner AG

(56) Entgegenhaltungen:
- EP-A- 0 170 239
- EP-A- 0 372 611
- FR-A- 1 045 028

## Beschreibung

Die vorliegende Erfindung betrifft eine Spritzmaschine nach dem Oberbegriff von Anspruch 1.

Sowohl im Bereich der Einfüllöffnung, wo das Spritzmedium in die Rotorbüchsen eingefüllt wird, wie auch im Bereich der Druckluft-Anschlussöffnung, wo austreibende Druckluft von einer Seite auf die Spritzmedium-gefüllten Büchsen wirkt, ebenso wie im Bereich der Ausspritzöffnung, wo das Druckluft-getriebene Spritzmedium aus den Büchsen in eine entsprechende Förderleitung austritt, sind Dichtungen zwischen Maschinen-Rotor und -Stator notwendig. Dies auch im Bereich der Einfüllöffnung, will man, beispielsweise bei staubigem Spritzmedium, eine Kontamination der Maschinenumgebung verhindern. Ueblicherweise werden diese Dichtungen durch Dichtplattenanordnungen realisiert.

Dabei ist es üblich, die obere und untere Dichtplattenanordnung jeweils flächig und im wesentlichen gleichförmig gegen die Rotorstufen-Stirnflächen zu pressen, um die notwendige Dichtheit sicherzustellen, welche sich nach den erhöhten Dichtungsanforderungen im Druckluft-Anschlussöffnungs- sowie Ausspritzöffnungsbereich richtet. Dadurch wirken aber auf die Rotorstufe ganz erhebliche Reibkräfte, und die entsprechenden Momente müssen durch den vorgesehenen Rotorantriebsmotor überwunden werden. Daraus ergibt sich weiter, dass leistungsstarke, voluminöse Antriebsmotoren für den Rotor der Spritzmaschine vorzusehen sind.

Aus der FR-A-1 045 028 ist eine Spritzmaschine bekannt, woran eine obere Dichtplattenanordnung einen ersten Teil im Bereich der Einfüllöffnung sowie einen zweiten im Bereich der Ausspritzöffnung aufweist. Letzterer ist gegen den Rotor federgespannt. Eine untere Rotorplattenanordnung ihrerseits weist einen ersten Teil auf im Bereich, der der Einfüllöffnung gegenüberliegt sowie einen zweiten Teil im Bereich der Druckluftanschlussöffnung, der ebenfalls gegen den Rotor federgespannt ist. Die beiden ersten Teile weisen zum Rotor Spiel auf.

Die beiden federgespannten Teile der Dichtplattenanordnungen werden angetrieben in Rotation versetzt.

Auswechseln der unterschiedlichen Flächenpressungen unterworfenen Teile der Dichtplattenanordnungen ist kompliziert, mittels Rotation der höher belasteten Teile wird deren Abnutzung vergleichmässigt und angestrebt, das Notwendigwerden eines Auswechselns zu verzögern.

Ausgehend von einer Maschine genannter Art ist es Aufgabe der vorliegenden Erfindung, die Auswechselbarkeit von Dichtplattenanordnungsteilen wesentlich zu vereinfachen.

Diese Aufgabe wird bei Ausbildung der erfindungsgemässen Spritzmaschine nach dem kennzeichnenden Teil von Anspruch 1 gelöst.

Dabei wird weiterhin davon ausgegangen, dass im Bereich der Einfüllöffnung die Dichtungsanforderungen zwischen Dichtplattenanordnungen und Rotorstufe wesentlich geringer sind als im Bereich der Druckluft-Anschlussöffnung und der ihr gegenüberliegenden Ausspritzöffnung. Damit kann, durch gezielte Auslegung der jeweiligen Flächenpressungen, örtlich verschieden den jeweiligen Anforderungen entsprechend, eine wesentliche Reduktion der auf den Antriebsmotor rückwirkenden ReibDrehmomente erzielt werden. Dies wiederum ermöglicht weiterhin, kleinere, leistungsschwächere Antriebsmotoren einzusetzen. Dabei wird unter Flächenpressung die Presskraft pro Flächeneinheit verstanden, also eigentlich der Druck.

In einer bevorzugten Ausführungsvariante gemäss Anspruch 4 werden mindestens die eine, bevorzugterweise, und wie spezifiziert, beide Dichtplattenanordnungen je zweiteilig ausgebildet, nämlich je einen ersten Teil im Bereich der Einfüllöffnung aufweisend und je einen zweiten im Bereich der Druckluft-Anschlussöffnung und der Ausspritzöffnung.

Dadurch wird es auf einfache Art und Weise ermöglicht, die erwähnten Flächenpressungen unterschiedlich auszubilden, dadurch, dass sich die jeweiligen Teile der Dichtplattenanordnungen relativ zueinander ohne weiteres verschieben können.

Dem Wortlaut von Anspruch 5 folgend, wird bevorzugterweise eine Spannvorrichtung vorgesehen, welche, vorzugsweise einstellbar, die Dichtungsplattenanordnung gegen die Rotorstufe verspannt und welche im Bereich der Druckluft-Anschlussöffnung und der Ausspritzöffnung wesentlich spannwirksamer einstellbar ist als im Bereich der Einfüllöffnung. Damit wird erreicht, dass, gezielt, die erwünschten und notwendigen dichtungssichernden Flächenpressungen eingestellt werden können.

Gemäss Wortlaut von Anspruch 6 weist nun eine besonders bevorzugte Ausführungsform der erfindungsgemässen Spritzmaschine, insbesondere auch mit Blick auf Wartungsfreundlichkeit, je mindestens zweiteilige Dichtungsplattenanordnungen auf, je mit einem Teil im Einfüllöffnungsbereich und je einem im Druckluft-Anschlussöffnungs- und Ausspritzöffnungsbereich. Der Maschinen-Stator weist eine modular entfernbare, vorzugsweise ausklappbare Partie mit den der Druckluft-Anschlussöffnung und der Ausspritzöffnung zugeordneten Dichtplattenteilen auf sowie mit einer Spannanordnung, welche spannend auf die erwähnten Teile bezüglich der Rotorstufe einwirkt.

Dadurch wird weiter erleichtert, die insbesondere verschleissanfälligen Dichtungsanordnungspartien statorseitig modular zu entfernen bzw. aufzuklappen, wobei gleichzeitig eine entsprechende Partie der Rotorstufe freiliegt und beispielsweise der Rotor durch Drehen ohne weiteres als Ganzes inspiziert werden kann.

Dem Wortlaut von Anspruch 7 folgend, weist die Spannanordnung mindestens zwei, verteilt mit den erwähnten Teilen der Dichtungsplattenanordnungen wirkverbundene Spannkolbenanordnungen auf.

Bevorzugterweise, und dem Wortlaut von Anspruch 8 folgend, wird Synchronspannen an den erwähnten Spannkolbenanordnungen dadurch erreicht, dass sie je eine Zylinder/Kolbenanordnung umfassen, wobei je der Zylinder einerseits und die Kolbenstange anderseits je auf einen der Teile der Dichtplattenanordnungen wirken, derart, dass bei Zusammenfahren der Kolben/Zylinderanordnungen beide Teile zwischen sich die Rotorstufe 50 einspannen.

Dem Wortlaut von Anspruch 9 folgend, werden dabei die Kolben/Zylinderanordnungen, vorzugsweise in Verspannungsrichtung, frei beweglich am Maschinen-Stator gelagert, derart, dass bei Auseinanderfahren der erwähnten Kolben/Zylinderanordnungen erst einer der Dichtplattenanordnungs-Teile von der Rotorstufe gelöst wird, auf einen Anschlag fährt, worauf der zweite der Dichtplattenanordnungs-Teile von der Rotorstufe abgehoben wird.

Im weiteren werden die mindestens zwei Kolben/Zylinderanordnungen der Spannvorrichtung bezüglich einer Maschinen-Druckmediumsguelle seriegeschaltet, und es ist ein manuell betätigbares Druckerzeugungsorgan, ebenfalls in Serie auf die erwähnten Anordnungen wirkend, vorgesehen, wobei mit letzterem, einstellbar, die Dichtungsspannung aufgebaut wird.

Weitere bevorzugte Ausführungsformen sind in den Ansprüchen 10 bis 14 spezifiziert, wobei insbesondere, dem Wortlaut von Anspruch 14 folgend, der erfindungsgemässe Aufbau der Spritzmaschine den Einsatz eines hydraulischen Nabenmotors als Antriebsmotor für die Rotorstufe mitermöglicht.

Die Erfindung wird anschliessend beispielsweise anhand von Figuren erläutert.

Diese zeigen:
- Fig. 1: schematisch, den bekannten Aufbau einer Rotorspritzmaschine;
- Fig. 2: in Seitenansicht und vereinfacht, eine erfindungsgemässe Spritzmaschine;
- Fig. 3: eine an der erfindungsgemässen Maschine bevorzugterweise eingesetzte Maschinen-Stator-seitige, obere Dichtplattenanordnung in Aufsicht;
- Fig. 4: eine teilweise Schnittdarstellung gemäss Linie B-B von Fig. 7 zur Erläuterung des bevorzugt vorgesehenen federnden Abstreifers an der Dichtungsplattenanordnung;
- Fig. 5: die Aufsicht auf die untere Dichtungsplattenanordnung, statorseitig an der erfindungsgemässen Spritzmaschine;
- Fig. 6: vereinfacht und in Aufsicht, die erfindungsgemässe Spritzmaschine mit erfindungsgemäss ausklappbarer hochdruckseitiger Dichtungsplattenanordnung und diesbezüglicher Spannanordnung;
- Fig. 7a bis 7c: die an der Maschine gemäss Fig. 6 vorgesehenen Spannkolbenanordnungen in dichtend gespannter (a), teilweise entspannter (b) und vollständig entspannter (c) Position;
- Fig. 8: schematisch und vereinfacht, das Hydraulikschema zur Betätigung der Spannkolbenanordnung gemäss Fig. 7, vorgesehen an der Maschine gemäss Fig. 6.

### Prinzip der Rotorspritzmaschine

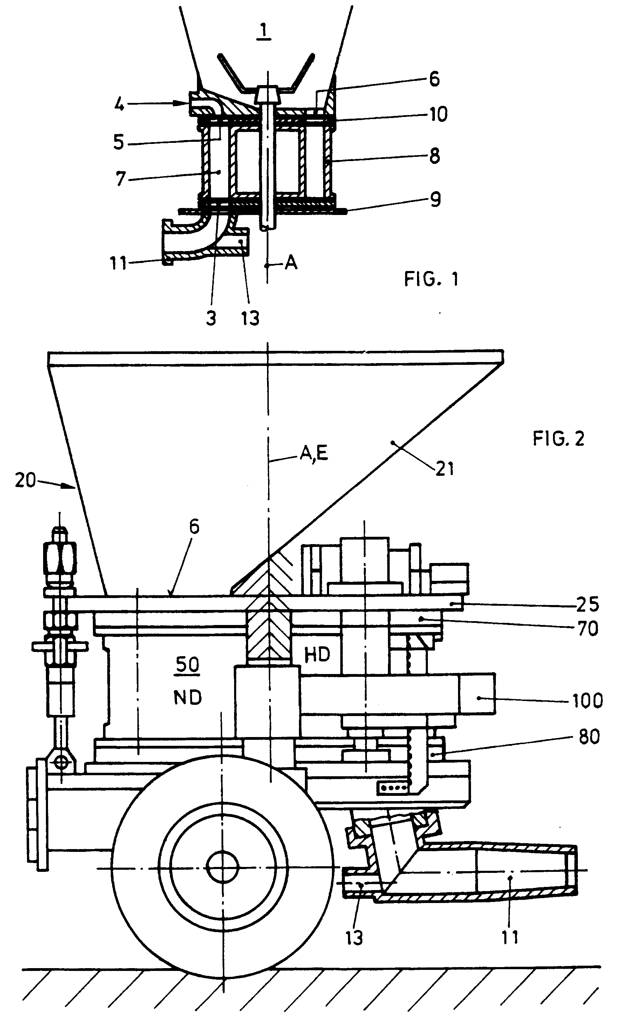

In Fig. 1 ist schematisch eine nach dem Rotorprinzip arbeitende Betonspritzmaschine dargestellt. In einen Trichter 1 wird Beton eingefüllt. Unterhalb des Trichters 1 läuft, getrieben um eine Achse A, ein Rotor 8 um, welcher, ähnlich einem Revolver, an seinem Umfang verteilt, mehrere Aufnahmebüchsen 7 für das Beton umfasst. Ortsfest am Trichter 1 ist eine Einfüllöffnung 6 so angeordnet, dass, sequentiell, die Aufnahmebüchsen 7 bei Drehen des Rotors mit der Oeffnung 6 in Ausrichtung gebracht werden.

Die jeweils mit der Einfüllöffnung 6 in Ausrichtung gebrachten Büchsen 7 am Rotor 8 sind unten durch eine stationäre Dichtplatte 9 verschlossen.

Trichterseitig ist, gerätefest, eine Druckluftleitung 4 vorgesehen, welche über eine Druckluftöffnung 5 mit jeweiligen, damit in Ausrichtung gebrachten Büchsen 7 in Wirkverbindung gebracht wird. In dieser Ausschiessposition, in Ausrichtung mit Druckluftöffnung 5, ist die jeweilige Büchse 7 ausgerichten auf eine unten gelegene Ausschiessöffnung 3 in der Dichtplatte 9. Die Dichtplatte 9 verschliesst, einerseits, in Einfüllposition die jeweilige Büchse 7 nach unten und stellt, anderseits, für das Ausschiessen des in die jeweilige Büchse 7 eingefüllten Betons, Dichtheit an der Ausschiessöffnung 3 sicher.

Eine obere Dichtplatte 10 wirkt auf die Oberseite des Rotors 8. Die Ausschiessöffnung 3 geht über einen Krümmer 11 in die hier nicht dargestellte Förderleitung der Betonspritzmaschine über, in welchen Krümmer 11 eine Förderdruck-Luftleitung 13 einmündet.

### Erfindungsgemässe Maschine

In Fig. 2 ist, in Seitenansicht, eine erfindungsgemässe Rotor-Betonspritzmaschine dargestellt, ohne die üblicherweise auf dem gleichen Wagen montierten Steuerungen und Antriebsaggregate. Anhand dieser Figur sollen die wesentlichen Funktionsgruppen an der erfindungsgemässen Maschine vorgestellt werden, welche anschliessend detaillierter beschrieben werden sollen.

Die erfindungsgemässe Maschine umfasst, wie üblich, eine Einfüllanordnung füllanordnung 20, mit einem Einfülltrichter 21 mit Rührwerk (nicht dargestellt) sowie Rüttler. Wie anhand von Fig. 1 erläutert wurde, mündet der Trichter 21 schliesslich in die Einfüllöffnung 6 für die Rotorbüchsen 7 aus. Die Einfüllanordnung 20 ist an einem Geräterahmen 25 montiert.

Die erfindungsgemässe Maschine umfasst weiter eine Rotorstufe 50, eine obere stationäre Dichtungsanordnung 70 sowie eine untere stationäre Dichtungsanordnung 80. Die Rotorstufe 50 sowie die Dichtungsanordnungen 70 und 80 können, in Aufsicht, im wesentlichen durch eine diametrale Ebene E durch die Rotorachse A, senkrecht zur Ebene von Fig. 2, in eine Niederdruckseite ND und eine Hochdruckseite HD unterteilt werden. Niederdruckseitig wird, im wesentlichen unter Atmosphärendruck, Spritzmedium durch die Einfüllanordnung 20 in die Rotorstufe 50 gefüllt, während auf der Hochdruckseite, wie anhand von Fig. 1 erläutert wurde, das Spritzmedium mittels Druckluft aus Leitung 4 und Leitung 13 ausgeschossen wird. Die beiden Bereiche ND und HD sind in Fig. 2 schematisch durch die Schraffur beidseits der Ebene E durch die Rotorachse A angedeutet.

Hochdruckseitig HD ist weiter eine Spannanordnung 100 vorgesehen, mittels welcher, einerseits, die einfache Zugänglichkeit zur Rotorstufe 50 sowie den HD-seitigen Partien der Dichtungsanordnungen 70, 80 sichergestellt ist und mit welcher, anderseits, wie noch zu erläutern sein wird, die hochdruckseitigen Abdichtungen am Rotor sichergestellt werden.

Es sollen nun anschliessend die erfindungswichtigen Baugruppen der Maschine erläutert werden.

### Rotorstufe 50

Die an der erfindungsgemässen Maschine eingesetzte Rotorstufe 50 umfasst einen hydraulischen Nabenmotor, z.B. einen "Poclain"-Motor, mit einem starr mit dem Geräterahmen 25 (Fig. 2) verbundenen Motor-Stator, gebildet durch die Motorachse.

### Obere Dichtungsanordnung 70

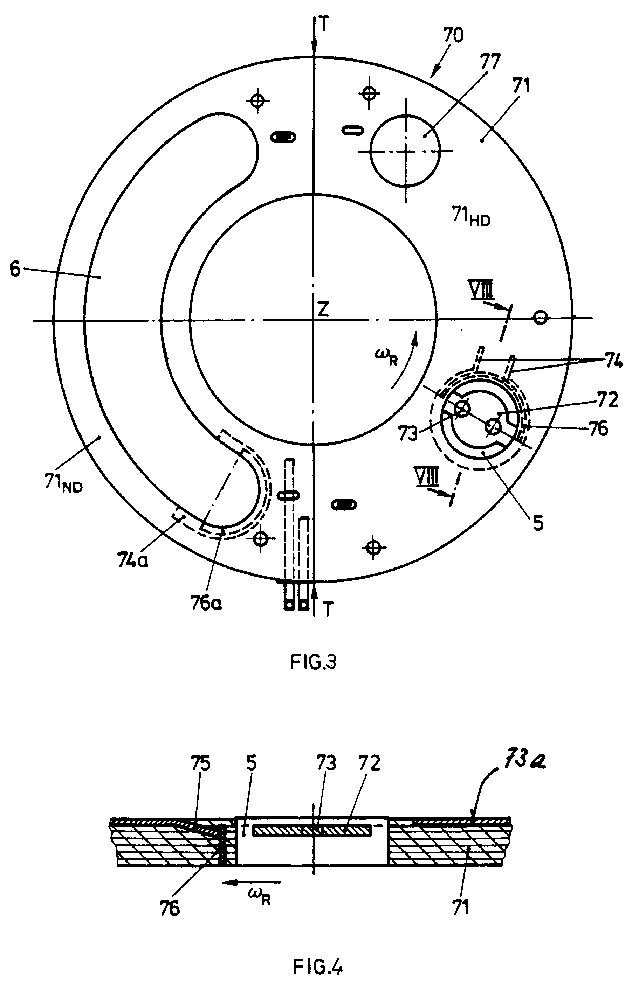

Der obere Uebergang zwischen Rotorstufe 50 und geräteseitigen Anschlüssen, nämlich der Einlassanordnung 20 und der Druckluftleitung 4 gemäss Fig. 1, erfolgt an der oberen Dichtungsanordnung 70, gemäss Fig.3. Sie wird, geräterahmenseitig, durch eine im wesentlichen kreisringförmige, elastische Platte 71, vorzugsweise Gummiplatte, gebildet, mit einem Hochdrucksegment 71_{HD} und einem Niederdrucksegment 71_{ND}. Im Hochdrucksegment 71_{HD} ist die Druckluftöffnung 5 gemäss Fig. 1 vorgesehen.

An zwei sich radial bezüglich des Kreisringzentrums Z gegenüberliegenden Halterungen ist in der Druckluftöffnung 5, wie insbesondere in Fig. 4 ersichtlich, ein im wesentlichen kreisförmiger Mittensteg 72 mit Düsenöffnungen 73 aufgehängt. Damit wird ein düsenartiger Uebergang geschaffen. Die Platte 71, aus hartem, vulkanisiertem Gummi gefertigt, weist an ihrer Oberseite eine Metalldeckplatte 73 auf, an der der Steg 72 angeformt ist.

Mit ω_{R} ist in Fig. 3 und in Fig. 4 die Rotorbewegung bezüglich der feststehenden Platte 71 eingetragen. Die Deckplatte 73 ist im Bereich der Druckluftöffnung 5, wie bei 74 dargestellt, eingeschnitten und bildet den insbesondere in Fig. 4 ersichtlichen, sich in die Platte hinein erstreckenden Federsteg 75. An diesem ist, endständig, ein halbkreissegmentförmig gebogenes Abstreifelement 76 angeschweisst. Das Abstreifelement 76 ist an der Unterseite der Platte 71, d.h. mit der mit der oberen Rotorfläche in Reibeingriff befindlichen Plattenfläche, bündig freiliegend und, mit dem Material der Platte 71 und dem Federsteg 75, federnd gelagert. Damit ist ein enges, selbstnachstellendes Anlegen des Abstreifelementes 76 an der oberen Rotorabschlussfläche sichergestellt.

Durch die Druckluftöffnung 5 wird, wie in Fig. 1 schematisch dargestellt, über Druckluftleitung 4 jeweils der Füllinhalt einer der Rotorbüchsen 7, 7a ausgeschossen. Aufgrund des unter hohem Ueberdruck erfolgenden Ausschiessens bleibt, bei Weiterdrehen der Rotorstufe 50 in Richtung w_{R}, die eben geleerte Rotorbüchse 7, 7a auf Ueberdruck. Aus diesem Grund folgt der Druckluftöffnung 5 in der Platte 71 eine Druckentlastungsöffnung 77, welche mit der Maschinenumgebung kommuniziert und durch welche Druckausgleich erfolgt, bevor die betrachtete Rotorbüchse das Niederdrucksegment 71_{ND} der Platte 71 erreicht.

Im Niederdrucksegment 71_{ND} der Platte 71 ist, kreissegmentförmig, die Einfüllöffnung 6 gemäss Fig. 1 vorgesehen. An der Einfüllöffnung 6 werden mehrere, im spezifischen Beispiel ca. viereinhalb Büchsen 7, 7a der Rotorstufe 50 gleichzeitig gefüllt. In Rotordrehrichtung w_{R} ist am Ende der Oeffnung 6 wiederum ein Abstreifelement 76a vorgesehen, angebracht und in die Platte 71 eingelassen über nach unten gebogene Stege 74a an der Deckplatte 73 gemäss Fig. 4, in Analogie zum Element 76 an der Druckluftöffnung 5.

An der oberen, mit dem Rotor in Reibeingriff stehenden Platte 71 sind einerseits die im Gummiplattenmaterial federnden Abstreifer 76 und 76a, und es ist anderseits eine Druckentlastungsöffnung 77 vorgesehen.

### Untere Dichtungsanordnung 80

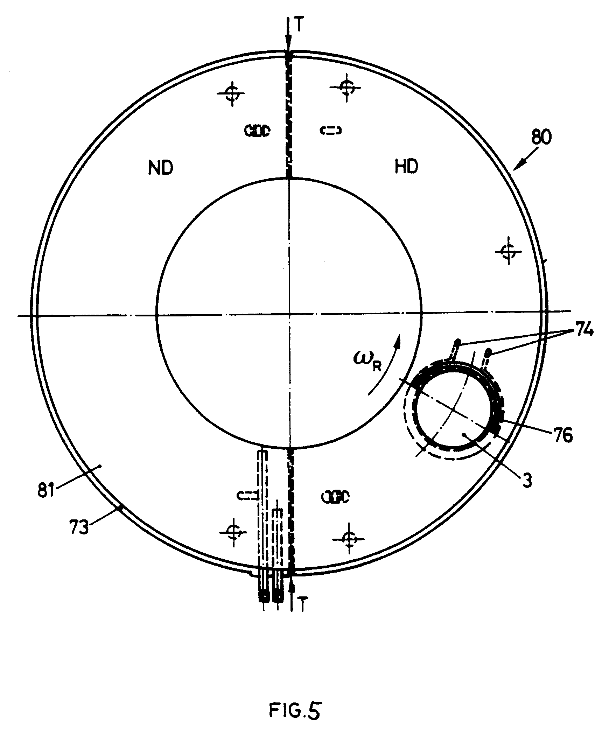

Gemäss Fig. 5 ist unterhalb der Rotorstufe 50 eine untere, kreisringförmige Dichtplatte 81, wiederum aus elastischem Material, vorzugsweise aus Gummi, vorgesehen, wobei auch die untere Dichtplatte 81 in ein Hochdrucksegment 81_{HD} und ein Niederdrucksegment 81_{ND} unterteilbar ist. Hochdruckseitig ist die Ausschiessöffnung 3 gemäss Fig. 1 vorgesehen, ausgerichtet auf die Druckluftöffnung 5 gemäss Fig. 3. An der Ausschiessöffnung 3 ist ein Abstreifelement 76 vorgesehen, angeordnet und aufgebaut wie das Abstreifelement 76 an der Druckluftöffnung 5.

Während Fig. 3 eine Aufsicht auf die obere Dichtplatte 71 darstellt, zeigt Fig. 5 die Aufsicht auf die untere und zeigt damit das Abstreifelement 76 an der Oeffnung 3 freiliegend. Der Plattenaufbau der Platte 81 mit einer Deckplatte 73 darunter, analog zu derjenigen gemäss Fig. 4, ist gleich wie der Aufbau der oberen Platte 71, abgesehen davon, dass an der unteren Platte 81 weder eine Entlastungsöffnung 77 noch, wie sich ohne weiteres aus Fig. 1 ergibt, eine Einfüllöffnung 6 vorgesehen ist.

Wie im weiteren ersichtlich, aus Quervergleich der Fig. 1, 3 und 5, bestehen auf der Hochdruckseite HD wesentlich höhere Dichtungsanforderungen zwischen den beiden Platten 71, 81 und der Rotorstufe 50. Es ist mithin möglich, mittels Dimensionierung der Dicke der jeweiligen Dichtplatten 71 und 81 an den Niederdrucksegmenten 71_{ND}, 81_{ND} etwas geringer als an den Hochdrucksegmenten 71_{HD}, 81_{HD}, das auf den Rotorantrieb rückwirkende Reibmoment wesentlich zu reduzieren. Dies erlaubt wiederum, die notwendige Antriebsleistung des vorgesehenen Nabenmotors zu reduzieren.

### Spannanordnung 100

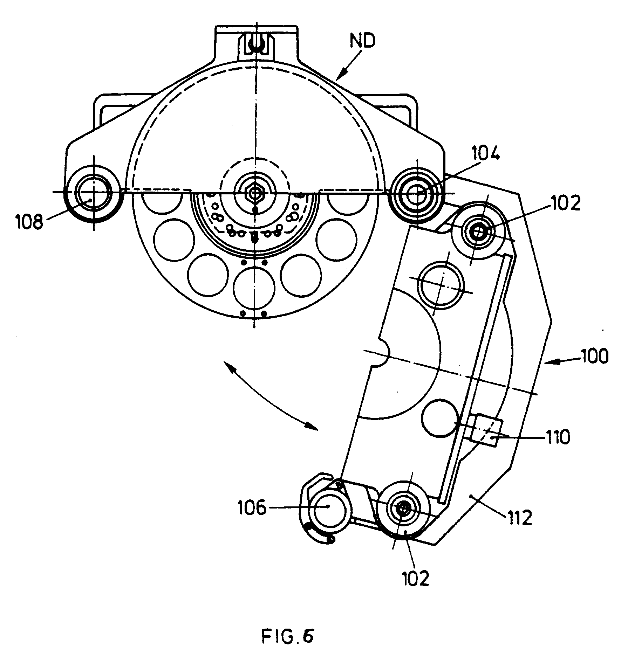

In Fig. 6 ist eine Aufsicht auf eine erfindungsgemässe Maschine dargestellt, wobei, aus Uebersichtsgründen, alle obengelegenen Aggregate entfernt sind. Aus Fig. 6 ist ein ganz wesentliches Merkmal der erfindungsgemässen Maschine erkenntlich:

Die obere und die untere Dichtungsplatte 71 bzw. 81 sind, wie mit T in den Fig. 3 und 5 dargestellt, in je die beiden Segmente 71_{HD}, 71_{ND}; 81_{HD}, 81_{ND} getrennt. Wie noch zu beschreiben sein wird, sind die beiden Hochdrucksegmente 71_{HD} und 81_{HD} mit noch zu beschreibenden Spannkolben 102 um ein in der Trennebene entsprechend T vorgesehenes vertikales Schwenklager 104 ausschwenkbar; dem Schwenklager 104 gegenüberliegend ist eine Verschlusspartie 106 vorgesehen, mit welcher die Spannvorrichtung 100, in eingeklappter Position, durch Eingriff auf eine niederdruckseitige Verschlussanordnung 108 verriegelt werden kann.

Die Spannkolbenanordnungen 102 mit weiteren mit der Spannanordnung 100 ausschwenkbaren Organen, wie Filterstufe für die Druckausgleichsöffnung 77, Anschluss 110 für die Druckluft an Leitung 4 von Fig. 1 etc., sind an einem Trägerrahmen 112 montiert.

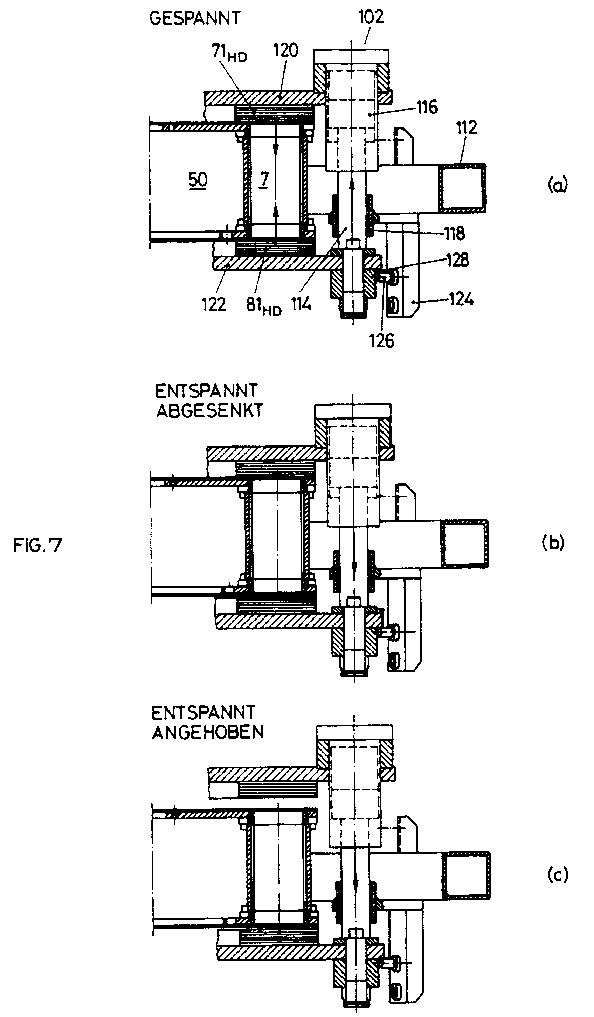

In Fig. 7(a) bis 7(c) ist eine der beiden gleich ausgebildeten Spannkolbenanordnungen 102 in gespannter Position (a), in entspannter und nach unten abgesenkter Position (b) und in entspannter, nach oben und unten abgehobener Position (c) dargestellt. Die Bedeutung dieser Positionen wird erläutert werden.

Gemäss Fig. 7(a), welche im Detail erläutert werden soll, um dann anhand der Fig. 7(b) und (c) die Kinetik der beiden Spannkolbenanordnungen 102 gemäss Fig. 6 zu erläutern, ist die Kolbenstange 114 einer Zylinder/Kolbenanordnung 116 in einer Gleitbüchse 118 axial frei beweglich gelagert. Der Zylinder der Kolben/Zylinderanordnung 116 trägt, über eine Montageplatte 120, welche gemäss Fig. 6 beide Spannkolbenanordnungen 102 trägt, das hochdruckseitige Segment 71_{HD} der Platte 71.

Die Kolbenstange 114 ihrerseits trägt, wiederum über eine Trägerplatte 122, welche gemeinsam für beide Spannkolbenanordnungen 102 vorgesehen ist, das Hochdrucksegment 81_{HD} der unteren Platte 81.

Durch Zusammenzug der hydraulischen Kolben/Zylinderanordnung 116 werden symmetrisch die beiden Hochdrucksegmente 71_{HD} und 81_{HD}, je an zwei Bereichen, gemäss Fig. 6 durch die beiden Spannkolbenanordnungen 102 gleichermassen an die Rotorstufe 50 bzw. deren Büchsen 7 gepresst.

Mittels eines Stellschiebers 124 ist bezüglich des Rahmens 112 ein unterer Anschlagnocken 126 für die Kolbenstange 114 der Kolben/Zylinderanordnung 116 positionierbar und liegt in gespannter Position der Spannkolbenanordnung 102 gemäss Fig. 7(a), in axialer Richtung betrachtet, beabstandet und unterhalb einer Anschlagfläche 128 an der Kolbenstange 114.

Wird nun die Kolben/Zylinderanordnung 116 entspannt, so wird, gemäss Fig. 7(b), vorerst die Kolbenstange 114 auf den Anschlagnocken 126 bewegt; Zylinder mit den Platten 120 und 71_{HD} bleiben, Schwerkraft-nach-unten-getrieben, stationär. Dadurch wird das untere Dichtplattensegment 81_{HD}, wie in Fig. 7(b) dargestellt, nach unten abgesenkt.

Durch Weiterausfahren der Kolben/Zylinderanordnung 116 wird nun, bei auf Anschlag gefahrener Kolbenstange 114, der Zylinder hochgehoben, gemäss Fig. 7(c), wodurch die Montageplatte 120 gemeinsam mit dem Hochdrucksegment 71_{HD} der oberen Druckplatte 71 angehoben wird.

Wie anhand des noch zu erläuternden Hydraulikschemas gezeigt werden wird, werden die beiden Spannkolbenanordnungen 102 je mit ihren Kolben/Zylinderanordnungen 116 synchron bewegt, so dass auf einfache Art und Weise einerseits die erforderliche Dichtungsspannung gemäss Fig. 7(a) an die Rotorstufe 50 erreicht wird, anderseits voll entspannte Position gemäss Fig. 7(c), in welcher, gemäss Fig. 6, die ganze geräteseitige Hochdruckpartie der Spannvorrichtung 100 ausgeklappt werden kann.

Durch Vorgabe des Druckes auf die Spannkolbenanordnungen 102 gemäss Fig. 7(a) kann der notwendige Dichtungsdruck, unabhängig von den Dichtungsverhältnissen an der niederdruckseitigen Partie ND gemäss Fig. 6, optimiert werden, derart, dass nur an den HD-Segmenten hohe Flächenpressungen realisiert werden, wo sie, eben hochdruckseitig, auch notwendig sind. Niederdruckseitig bleiben die Dichtungsverhältnisse davon unbeeinflusst, entsprechend einer wesentlich geringeren notwendigen Flächenpressung. Dies erlaubt, die Leistung des Rotorantriebsmotors, im speziellen des vorgestellten Nabenmotors, um mehr als die Hälfte zu reduzieren. Wird beispielsweise eine hochdruck- wie auch niederdruckseitig gleiche dichtende Flächenpressung zwischen den Platten 81, 71 und Rotorstufe 50 realisiert und ergibt sich, im wesentlichen dadurch, eine notwendige Antriebsleistung von 41kW, so kann durch erfindungsgemässe Zweiteilung in Niederdruckseite und Hochdruckseite an der erfindungsgemässen Maschine die notwendige Motorenleistung auf ca. 19kW reduziert werden.

### Hydraulikschema für die Spannkolbenanordnungen 102

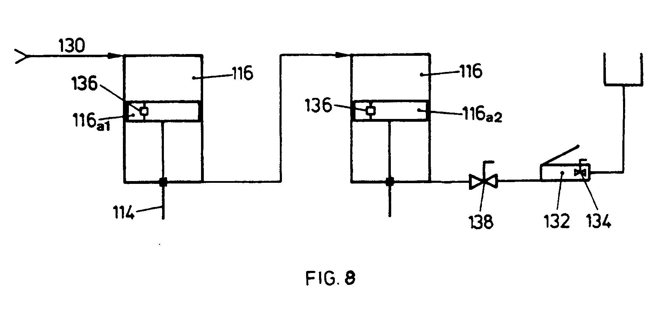

In Fig. 8 ist schematisch das Hydraulikschema für die Zylinder/Kolbenanordnungen 116 der Spannkolbenanordnungen 102 gemäss Fig. 7 dargestellt. Die beiden Zylinder der Anordnungen 116 sind seriegeschaltet, wobei das Volumen unterhalb des Kolbens 116ₐ₁, unter Mitberücksichtigung des durch die Kolbenstange 114 aufgespannten Volumens, gleich gross ist wie das Volumen oberhalb des Kolbens 116ₐ₂. Ueber Leitung 130 wird Anlagedruck, beispielsweise 18bar, angelegt. Zum Spannen der Spannkolbenanordnungen wird mittels einer Handpumpe 132 ein hoher Druck aufgebaut, womit beide Kolben 116ₐ in den Zylindern spannend (Fig. 1) hochgetrieben werden. Die erwähnten gleichen Volumina sichern dabei, dass beide Kolben 116ₐ den gleichen Spannhub zurücklegen.

Zum Entspannen der Spannkolbenanordnungen 102 wird der durch die Handpumpe 132 aufgebaute hohe Druck, beispielsweise mittels eines manuell betätigbaren Ventils 134, entspannt, so dass die beiden Kolben 116ₐ aufgrund des Anlagedruckes in Leitung 130 nach unten laufen und, gemäss Fig. 7, die Rotorstufe freigeben.

In den Kolben 116ₐ sind je mechanisch betätigte Rückschlagventile 136 bekannter Art eingebaut. Erreicht beispielsweise Kolben 116ₐ₁ aufgrund beispielsweise von Leckverlusten die untere Fläche seines zugeordneten Zylinders, bevor Kolben 116ₐ₂ die entsprechende erreicht, so wird, mechanisch, das Ventil 136 am Kolben 116ₐ₁ geöffnet, so dass, durch den Anlagedruck betrieben, Kolben 116ₐ₂ ebenfalls in die Anschlagposition getrieben wird. Damit wird Bewegungsgleichlauf der Kolben 116ₐ nötigenfalls immer wieder erstellt.

Zwischen Handpumpe 132 und dem diesbezüglichen Anschluss an die eine der Kolben/Zylinderanordnungen 116 ist vorzugsweise ein manuell betätigbares Kugelventil 138 vorgesehen.

## Patentansprüche

1. Spritzmaschine mit einer angetriebenen Rotorstufe (50), an deren Peripherie beidseits offene Büchsen mit einer axialen Ausrichtungskomponente angeordnet sind, sowie, Maschinen-Stator-seitig, eine Einfüllöffnung (6) von einer Füllanordnung (20), eine Druckluft-Anschlussöffnung (5), eine in Büchsenanordnungsrichtung der Druckluft-Anschlussöffnung (5) gegenüberliegende Ausspritzöffnung (3) vorgesehen sind, wobei alle erwähnten statorseitigen Oeffnungen so angeordnet sind, dass bei Drehen der Rotorstufe (50) deren Büchsenöffnungen über die genannten Oeffnungen (6, 5, 3) streichen, wobei, statorseitig, beidseits der Rotorstufe (50) Dichtplattenanordnungen (70, 80) vorgesehen sind, je einen Teil im Bereich der Einfüllöffnung bzw. ihr gegenüberliegend sowie einen Teil im Bereich der Druckluft-Anschlussöffnung bzw. ihr gegenüberliegend umfassen, wobei mit den Teilen die Flächenpressung zwischen den Dichtplattenanordnungen und der Rotorstufe im Bereich (ND) der Einfüllöffnung (6) geringer erstellt ist als die Flächenpressung der genannten Dichtplattenanordnungen an die Rotorstufe (50) im Bereich (HD) der Druckluft-Anschlussöffnung (5) und der Austrittsöffnung (3), dadurch gekennzeichnet, dass die Teile der Dichtungsplattenanordnungen durch eine Bewegung in Ebenen der Dichtungsplatten voneinander trennbar sind.

2. Spritzmaschine nach Anspruch 1, dadurch gekennzeichnet, dass die Teile entlang Trennebenen (T) trennbar sind.

3. Spritzmaschine nach Anspruch 1, dadurch gekennzeichnet, dass die Teile entlang radial gegen die Rotorstufenachse verlaufender Trennebenen (T) trennbar sind.

4. Spritzmaschine nach einem der Ansprüchen 1 bis 3, dadurch gekennzeichnet, dass die Dichtplattenanordnungen (70, 80) je zweiteilig sind, je einen ersten Teil (71_{ND}, 81_{ND}) im Bereich der Einfüllöffnung (6) und je einen zweiten (71_{HD}, 81_{HD}) im Bereich der Druckluft-Anschlussöffnung und der Ausspritzöffnung (3) aufweisen.

5. Spritzmaschine nach einem der Ansprüche 1 bis 4, dadurch gekennzeichnet, dass eine Spannvorrichtung (102) vorgesehen ist, welche, vorzugsweise einstellbar, die Teile der Dichtungsplattenanordnungen (80, 70) gegen die Rotorstufe (50) verspannt und welche im Bereich der DruckluftAnschlussöffnung (5) und der Ausspritzöffnung (3) wesentlich spannwirksamer einstellbar ist als im Bereich der Einfüllöffnung (6).

6. Spritzmaschine nach einem der Ansprüche 1 bis 5, dadurch gekennzeichnet, dass der Maschinen-Stator eine ausklappbare Partie (100) mit den der Druckluft-Anschlussöffnung und der Ausspritzöffnung zugeordneten Teilen (71_{HD}, 81_{HD}) aufweist sowie mit einer Spannanordnung (102), welche, spannend, auf die erwähnten Teile (71_{HD}, 81_{HD}) bezüglich der Rotorstufe (50) wirkt.

7. Spritzmaschine nach Anspruch 6, dadurch gekennzeichnet, dass die Spannanordnung (102) mindestens zwei verteilt mit den erwähnten Teilen (81_{HD}, 71_{HD}) der Dichtungsplattenanordnungen (70, 80) wirkverbundene Spannkolbenanordnungen (102) umfasst.

8. Spritzmaschine nach Anspruch 7, dadurch gekennzeichnet, dass die Spannkolbenanordnungen (102) je eine Zylinder/Kolbenanordnung (116) umfassen, wobei je Zylinder einerseits und Kolbenstange (114) anderseits je auf einen der Teile (71_{HD}, 81_{HD}) der Dichtplattenanordnungen (70, 80) wirken, derart, dass, bei Zusammenfahren der Kolben/Zylinderanordnungen (116), beide Teile zwischen sich die Rotorstufe (50) einspannen.

9. Spritzmaschine nach Anspruch 8, dadurch gekennzeichnet, dass die Kolben/Zylinderanordnung (116) in Dichtplatten-Verspannrichtung frei beweglich am Maschinenstator gelagert ist, derart, dass, bei Auseinanderfahren der Kolben/Zylinderanordnung (116), erst eines der Dichtplatten-Anordnungsteile von der Rotorstufe (50) gelöst wird, auf einen Anschlag fährt, worauf der zweite der Dichtplatten-Anordnungsteile von der Rotorstufe abgehoben wird.

10. Spritzmaschine nach einem der Ansprüche 7 bis 9, dadurch gekennzeichnet, dass bezüglich einer Maschinen-Druckmediumsquelle die Kolben/Zylinderanordnungen (116) seriegeschaltet sind und ein manuell betätigbares Druckerzeugungsorgan in Serie auf die Kolben/Zylinderanordnungen (116) wirkt, um damit die Dichtungsspannung aufzubauen.

11. Spritzmaschine nach einem der Ansprüche 1 bis 10, dadurch gekennzeichnet, dass die Dichtplattenanordnungen je eine elastische Platte, vorzugsweise Gummiplatte, bilden.

12. Spritzmaschine nach Anspruch 11, dadurch gekennzeichnet, dass die Dichtplattenanordnungen je an der von der Rotorstufe abgewandten Seite eine Metallplatte aufweisen, woran, über Metallplattenpartien federnd, durch die elastische Platte hindurchragende Abstreifelemente federnd gelagert sind.

13. Spritzmaschine nach einem der Ansprüche 1 bis 12, dadurch gekennzeichnet, dass am Maschinen-Stator, in Umlaufrichtung der Rotorstufe (50) der Druckluft-Anschlussöffnung (5) folgend, eine Verbindung zwischen Rotorbüchsen (7, 7a) und Maschinenumgebung erstellende Entlastungsöffnung (77) vorgesehen ist.

14. Spritzmaschine nach einem der Ansprüche 1 bis 13, dadurch gekennzeichnet, dass ein hydraulischer Nabenmotor als Antriebsmotor für die Rotorstufe (50) vorgesehen ist.

## Claims

1. A spraying machine comprising a driven rotor (50) having disposed on the periphery thereof sleeves opened on both sides with an axial orientation component, and, on a machine stator side, a filling opening (6) of a filling device (20), a compressed air supply opening (5) and an ejection opening (3) located opposite the latter in the direction of the sleeve means, wherein all said openings located on the stator side are so disposed that upon rotation of the rotor (50) the sleeve openings thereof run over said openings (6, 5, 3), wherein on stator side, on both sides of the rotor (50), there are provided sealing plate means (70, 80) each comprising one part located in the region of or facing the filling opening, and one part located in the region of or facing the compressed air supply opening, and wherein, owing to said parts, the surface pressure between the sealing plate means and the rotor in a region (ND) of the filling opening (6) is lower than the surface pressure of said sealing plate means against the rotor (50) in a region (HD) of the compressed air supply opening (5) and outlet opening (3), characterized in that the parts of the sealing plate means are separable from each other by moving in the planes of the sealing plates.

2. The spraying machine according to claim 1, characterized in that the parts are separable along separation planes (T).

3. The spraying machine according to claim 1, characterized in that the parts are separable along separation planes (T) extending radially towards the rotor axis.

4. The spraying machine according to any of claims 1 to 3, characterized in that the sealing plate means (70, 80) are in two parts and each include a first part (71_{ND}, 81_{ND}) in the region of the filling opening (6) and a second part (71_{HD}, 81_{HD}) in the region of the compressed air opening and ejection opening (3).

5. The spraying machine according to any of claims 1 to 4, characterized in that there is provided a clamping device (102), which clamps, preferably in an adjustable manner, the parts of the sealing plate means (80, 70) against the rotor (50), and which is adjustable to provide a substantially more effective clamping in the region of the compressed air supply opening (5) than in the region of the filling opening (6).

6. The spraying machine according to any of claims 1 to 5, characterized in that the machine stator comprises a pivotable section (100), which is formed of the parts (71_{HD}, 81_{HD}) associated with the compressed air opening, and ejection opening, and of a clamping device (102), which exerts a clamping action on said parts (71_{HD}, 81_{HD}) with respect to the rotor (50).

7. The spraying machine according to claim 6, characterized in that the clamping device (102) comprises at least two clamping piston devices (102) operatively coupled in a distributed manner with said parts (81_{HD}, 71_{HD}) of the sealing plate means (70, 80).

8. The spaying machine according to claim 7, characterized in that the clamping piston devices (102) each comprise a cylinder/piston device (116), each cylinder, on one side, and each piston rod (114), on the other side, acting on a respective one of parts (71_{HD}, 81_{HD}) of the sealing plate means (70, 80), so that upon contraction of the piston/cylinder devices, the two parts clamp the rotor (50) therebetween.

9. The spraying machine according to claim 8, characterized in that the piston/cylinder device (116) is mounted on the machine stator to be freely movable in the clamping direction of the sealing plates, so that upon separation of the piston/cylinder device (116), one part of the sealing plate means is first released from the rotor (50) and abuts against a stop, and thereafter the other part of the sealing plate means is lifted off the rotor.

10. The spaying machine according to any of claims 7 to 9, characterized in that the piston/cylinder devices (116) are series mounted with respect to a machine pressure medium source, and a manually actuatable pressure generator serially acts on the piston/cylinder devices (116) to thereby generate the sealing clamping.

11. The spraying machine according to any of claims 1 to 10, characterized in that the sealing plate means each form an elastic, preferably rubber, plate.

12. The spraying machine according to claim 11, characterized in that the sealing plate means each comprise, on the side thereof opposed to the rotor, a metal plate, on which guide elements extending through the elastic plate are elastically mounted by means of metal plate sections.

13. The spraying machine according to any of claims 1 to 12, characterized in that on the machine stator, following the compressed air supply opening (5) in the circumferential direction of the rotor (50), a discharge opening (77) is provided which ensures communication between the rotor sleeves (7, 7a) and the machine environment.

14. The spraying machine according to any of claims 1 to 13, characterized in that a hydraulic hub-mounted motor is provided as driving motor for the rotor (50).

## Revendications

1. Machine de pulvérisation comportant un rotor entraîné (50) sur la périphérie duquel sont disposées des douilles ouvertes des deux côtés et présentant une composante d'orientation axiale, une ouverture de remplissage (6) d'un dispositif de remplissage (20), côté stator de machine, une ouverture d'alimentation en air comprimé (5) et une ouverture de pulvérisation (3) située en face de celle-ci, dans le sens du dispositif de douilles, étant précisé que toutes ces ouvertures prévues côté stator sont disposées de telle sorte que quand le rotor (50) tourne, ses ouvertures de douilles passent audessus desdites ouvertures (6, 5, 3), qu'il est prévu côté stator, des deux côtés du rotor (50), des dispositifs formant plaques d'étanchéité (70, 80) qui comprennent chacun une partie située dans la zone de l'ouverture de remplissage ou en face de celle-ci, et une partie située dans la zone de l'ouverture d'alimentation en air comprimé ou en face de celle-ci, et que grâce à ces parties, la pression superficielle entre les dispositifs formant plaques d'étanchéité et le rotor est plus faible dans la zone (ND) de l'ouverture de remplissage (6) que dans la zone (HD) de l'ouverture d'alimentation en air comprimé (5) et de l'ouverture de sortie (3), caractérisée en ce que les parties des dispositifs formant plaques d'étanchéité sont aptes a être séparées l'une de l'autre grâce à un mouvement dans le plan des plaques d'étanchéité.

2. Machine de pulvérisation selon la revendication 1, caractérisée en ce que les parties sont aptes à être séparées suivant des plans de séparation (T).

3. Machine de pulvérisation selon la revendication 1, caractérisée en ce que les parties sont aptes à être séparées suivant des plans de séparation (T) s'étendant radialement vers l'axe de rotor.

4. Machine de pulvérisation selon l'une des revendications 1 à 3, caractérisée en ce que les dispositifs formant plaques d'étanchéité (70, 80) sont en deux parties et comprennent chacun une première partie (71_{ND}, 81_{ND}) située dans la zone de l'ouverture de remplissage (6), et une seconde partie (71_{HD}, 81_{HD}) située dans la zone de l'ouverture d'alimentation en air comprimé et de l'ouverture de pulvérisation (3).

5. Machine de pulvérisation selon l'une des revendications 1 à 4, caractérisée en ce qu'il est prévu un dispositif de serrage (102) qui serre, de préférence de manière réglable, les parties des dispositifs formant plaques d'étanchéité (80, 70) contre le rotor (50) et qui peut être réglé pour produire un serrage nettement plus actif dans la zone de l'ouverture d'alimentation en air comprimé (5) et de l'ouverture de pulvérisation (3) que dans la zone de l'ouverture de remplissage (6).

6. Machine de pulvérisation selon l'une des revendications 1 à 5, caractérisée en ce que le stator de machine comporte une partie pivotante (100) formée des parties (71_{HD}, 81_{HD}) associées à l'ouverture d'alimentation en air comprimé et à l'ouverture de pulvérisation, et d'un dispositif de serrage (102) qui exerce une action de serrage sur lesdites parties (71_{HD}, 81_{HD}) par rapport au rotor (50).

7. Machine de pulvérisation selon la revendication 6, caractérisée en ce que le dispositif de serrage (102) comporte au moins deux dispositifs formant pistons de serrage (102) qui sont en relation fonctionnelle, de façon répartie, avec les parties (81_{HD}, 71_{HD}) des dispositifs formant plaques d'étanchéité (70, 80).

8. Machine de pulvérisation selon la revendication 7, caractérisée en ce que les dispositifs formant pistons de serrage (102) comprennent chacun un dispositif cylindre/piston (116), chaque cylindre, d'une part, et chaque tige de piston (114), d'autre part, agissant sur les parties respectives (71_{HD}, 81_{HD}) des dispositifs formant plaques d'étanchéité (70, 80), de sorte que lors de la rétraction des dispositifs pistons/cylindres (116), les deux parties serrent le rotor (50) entre elles.

9. Machine de pulvérisation selon la revendication 8, caractérisée en ce que le dispositif piston/cylindre (116) est monté sur le stator de machine pour pouvoir être librement mobile dans le sens de serrage des plaques d'étanchéité, de sorte que lors du déploiement du dispositif piston/cylindre (116), l'une des parties du dispositif formant plaque d'étanchéité est tout d'abord détachée du rotor (50) et arrive sur une butée, après quoi la seconde partie du dispositif formant plaque d'étanchéité est décollée du rotor.

10. Machine de pulvérisation selon l'une des revendications 7 à 9, caractérisée en ce que les dispositifs pistons/cylindres (116) sont montés en série par rapport à une source de produit sous pression de la machine, et un organe générateur de pression à actionnement manuel agit en série sur les dispositifs pistons/cylindres (116) pour créer ainsi le serrage d'étanchéité.

11. Machine de pulvérisation selon l'une des revendications 1 à 10, caractérisée en ce que les dispositifs formant plaques d'étanchéité forment chacun une plaque élastique, de préférence en caoutchouc.

12. Machine de pulvérisation selon la revendication 11, caractérisée en ce que les dispositifs formant plaques d'étanchéité comportent chacun, sur leur côté opposé au rotor, une plaque métallique sur laquelle des éléments racleurs qui traversent la plaque élastique sont montés de manière élastique grâce à des parties de plaque métallique.

13. Machine de pulvérisation selon l'une des revendications 1 à 12, caractérisée en ce qu'il est prévu sur le stator de machine, à la suite de l'ouverture d'alimentation en air comprimé (5), dans le sens circonférenciel du rotor (50), une ouverture de décharge (77) qui établit une liaison entre les douilles de rotor (7, 7a) et l'environnement de la machine.

14. Machine de pulvérisation selon l'une des revendications 1 à 13, caractérisée en ce qu'il est prévu comme moteur d'entraînement pour le rotor (50) un moteur à moyeu hydraulique.
